# EUROPEAN PATENT APPLICATION

(11) **EP 4 488 510 A1**
(43) Date of publication of application: **08.01.2025**
(21) Application number: 23183296.5
(22) Date of filing: 04.07.2023
(51) Int. Cl.: F03D 13/10, F03D 13/40, B63B 77/10

(54) **TRANSPORT ARRANGEMENT**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The invention describes a transport arrangement (11, 12, 13) for transporting components (20, 21, 22, 23) of a plurality of offshore wind-driven electrolysis facilities (2), comprising a set of connectors (11) adapted to facilitate assembly of a stack (S) of components (20); a stack support means (12) adapted to support the component stack (S) on the deck (30) of an installation vessel (3); and a displacement means (13) adapted to displace the stack support means (12) to expose a portion (30P) of the deck space (30) of the installation vessel (3). The invention further describes a method of loading an installation vessel (3) with components (20, 21, 22, 23) of a plurality of offshore wind-driven electrolysis facilities (2) using such a transport arrangement (11, 12, 13)

## Description

### Background

To install an offshore wind turbine facility, its major components are generally transported by ship from a port to the installation site, at which a suitable foundation has previously been prepared. In a well-known configuration, a transition piece sits on the foundation, and is configured to receive a tower. The major components of an offshore wind turbine are the tower, nacelle (with generator and hub) and rotor blades. Since an installation vessel is expensive to hire, it is preferred to limit the number of journeys between port and offshore installation site. Significant costs can be saved by loading an installation vessel with the major components of several wind turbines, for example it is known to arrange the towers, nacelles (each with generator and hub already installed) and rotor blades of four or more offshore wind turbines on the deck of an installation vessel, fully exploiting the available deck space.

Developments in water electrolysis have increased the profitability of using offshore wind energy as a power source to drive water electrolysers. An offshore wind-powered water electrolysis facility can comprise a platform mounted at the base of the wind turbine tower, carrying multiple electrolyser modules. The platform can be constructed to sit atop a transition piece between foundation and tower, and neds to be installed before the tower is placed onto the transition piece. Therefore, the platform of a wind-powered water electrolysis facility must also be transported to the offshore site. However, the surface area of such a platform can be in the order of 900 m², which can be a significant portion of the total available deck space. In one approach, an installation vessel can be loaded with one or two such platforms, side by side on the deck, and these can be transported to the installation site and installed on the transition pieces in a first stage. In a second stage, the installation vessel returns to port and is loaded with the wind turbine components, which are then transported to the offshore site so that the installation can be completed. Alternatively, two installation vessels can be hired at the same time, one to transport the platforms and the other to transport the wind turbine components. However, the expense of two journeys is significant, for example an installation vessel can incur charges in the order of 100,000 € per day, and it can take several days to complete the installation of a single offshore wind turbine.

It is therefore an object of the invention to provide an improved way of transporting the components of multiple wind-driven electrolysis facilities to an offshore site.

This object is achieved by the claimed transport arrangement.

### Description

In the following, it shall be understood that an offshore wind-driven electrolysis facility ("offshore facility" in the following) comprises a wind turbine and a platform carrying an arrangement of electrolyser modules. The wind turbine may be assumed to comprise the usual arrangement of aerodynamic rotor, nacelle and tower. The tower can be set on top of a suitable foundation such as a monopile, a jacket foundation, a tripod foundation, a floating foundation etc., or on top of a transition piece previously installed on the foundation. The electrolyser platform shall be assumed to be mountable on the previously installed foundation, for example about the upper level of a transition piece. An offshore wind farm shall be understood to comprise several such (usually identical) facilities. The inventive transport arrangement is particularly suitable for transporting components of a plurality of offshore wind-driven electrolysis facilities from a port to the offshore installation site.

According to the invention, the transport arrangement comprises a set of connectors adapted to facilitate assembly of a stack of components; a stack support means adapted to support the component stack on the deck of an installation vessel; and a displacement means adapted to displace the stack support means to expose a portion of the deck space of the installation vessel.

An advantage of the inventive transport arrangement is that a single installation vessel can be used to transfer all components of multiple offshore wind-driven electrolysis facilities in a single journey. The electrolyser platforms are loaded onto the vessel in such a way that the stack of platforms does not actually occupy any deck space. By freeing up valuable deck space in this way, it is possible to arrange all components for multiple offshore installations - i.e. the wind turbine components as well as the large and heavy electrolyser platforms - on a single installation vessel. By avoiding the need to hire two installation vessels or to make two journeys, the costs of setting up multiple offshore wind-driven electrolysis facilities are reduced significantly.

The invention also includes a method of loading an installation vessel with components of multiple offshore wind-driven electrolysis facilities using such a transport arrangement, and comprises the steps of assembling a stack of identical components; arranging the component stack on the stack support means; displacing the stack support means to expose a portion of the deck space of the installation vessel; and arranging further components of the offshore facilities in the exposed deck space portion.

The invention also includes a method of installing a plurality of offshore wind-driven electrolysis facilities, comprising the steps of loading an installation vessel with components of a plurality of offshore wind-driven electrolysis facilities using the inventive method and transporting the components to the offshore installation site. Subsequently, the facilities are assembled by transferring an electrolyser platform from the installation vessel onto a waiting transition piece; transferring a tower from the installation vessel onto the transition piece; transferring a nacelle from the installation vessel onto the tower; and transferring an aerodynamic rotor from the installation vessel to the nacelle. After all offshore facilities have been assembled thus, the installation vessel returns to port in a final step.

Particularly advantageous embodiments and features of the invention are given by the dependent claims, as revealed in the following description. Features of different claim categories may be combined as appropriate to give further embodiments not described herein.

In a preferred embodiment of the invention, the displacement means is installed on the deck of an installation vessel and comprises a number of extendable beam assemblies. An extendable beam assembly preferably comprises several fixed beams secured to the installation vessel deck in a parallel arrangement, for example parallel to each other and in line with the ship's long axis. These fixed beams can be made of steel, and may have any suitable cross-section (e.g. "C" or "I"). The extendable beam assembly further comprises several moveable beams, each supported by one or more fixed beams and adapted to move relative to the fixed beam(s). For example, in a preferred embodiment of the invention, a moveable I-beam is partially enclosed by a pair of fixed I-beams in a nested arrangement. An arrangement of suitable rollers between the various surfaces can be provided to allow the moveable beams to move freely relative to their stationary or fixed beams. The displacement means can comprise a hydraulic drive arrangement which is configured to extend the moveable beams (and therefore also the stack support means) outward relative to the fixed beams in order to free up deck space; and to retract the moveable beams again when required. Such an arrangement of heavy-duty beams and displacement means can be referred to in the following as a skidding system.

Preferably, the fixed beams of the skidding system are secured to the deck at the stern of the installation vessel, so that the extendable beams can be actuated to displace the stack support means outward beyond the deck.

The stack support means can be realised in any suitable way, depending on the type of component stack to be supported. For example, if the component stack is a stack of electrolyser platforms and connectors, the stack support means can be realised to receive the lowermost connector.

As explained above, an electrolyser platform can be designed to be lowered in place onto a transition piece, which later on can receive the wind turbine tower. For example, an electrolyser platform can have appropriate structures formed on its underside to engage with complementary structures about the circumference in the upper region of a transition piece. In a preferred embodiment of the invention, a stack of electrolyser platforms is made by arranging each electrolyser platform on a connector that is constructed to duplicate the form of the upper region of a transition piece. Each connector is provided with a means for securing it to the next connector in the stack. In a particularly simple approach, the connectors are essentially identical, and each connector is a right cylindrical element with flanges at its upper and lower ends, and an annular arrangement of supporting brackets to receive an electrolyser platform. To assemble a platform stack, a first electrolyser platform is lowered into place onto the brackets of a first connector and secured to the supporting structures. A second connector is lowered into place onto the first connector and secured to it, for example by an annular arrangement of fasteners inserted through the matching flanges. A second electrolyser platform is then lowered into place onto the brackets of the second connector and secured to the supporting structures.

These steps are repeated until the stack is complete, and can be carried out in a quayside location or other suitable location.

The lowermost or first connector can have been secured to an interface part with which the stack is later secured to the stack support means. For example, the interface part can comprise a skid mount to facilitate transfer of the entire platform stack to the displacement means on the deck of an installation vessel. Alternatively, the entire platform stack can be lifted by crane and lowered onto the displacement means on the deck of the installation vessel, and the interface part can be used to secure the platform stack to the stack support means.

After loading the component stack onto the deck of the installation vessel, the component stack is displaced to free up some portion of deck space. In the above exemplary embodiment, a hydraulic drive is actuated to extend the moveable beams of the extendable beam assemblies relative to the fixed beams. With the fixed beams terminating at the edge of the deck, and arranged in line with the ship's long axis, the moveable beams (along with the component stack) are displaced outwards beyond the deck. During this stage, the component stack can be supported from underneath, for example by a bridge used to support a heavy-duty load-transfer vehicle such as a self-propelled modular transporter (SPMT) in an initial stage of loading the component stack onto the installation vessel. The loading procedure can then continue, and wind turbine components can be loaded into the freed-up deck space. For example, nacelles of the offshore facilities can be loaded into the space previously occupied by the component stack. Since the fixed beams of the skidding system are arranged in this deck space, a suitable support frame can first be placed over the fixed beams to receive the nacelles.

Instead of stacking the electrolyser platforms, moving this stack outwards beyond the deck and then arranging the towers, nacelles and rotor blades on the deck, other configurations are possible: for example the invention could be applied to stack the wind turbine towers and rotor blades, leaving the deck free to accommodate the nacelles and the electrolyser platforms. In any of several possible scenarios, an entire set of components for multiple offshore facilities is carried by a single installation vessel, and deck space is freed up by moving a previously assembled stack of components out beyond the deck.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows stages in the assembly of an offshore wind-powered electrolysis facility;
Figure 2 shows preparation of a stack S of identical components using connectors of the inventive transport arrangement;
Figure 3 shows an exemplary embodiment of a connector of Figure 2;
Figure 4 shows a component stack after loading onto the deck of an installation vessel;
Figure 5 shows an exemplary embodiment of a displacement means of the inventive transport arrangement;
Figure 6 shows a component stack after displacement;
Figure 7 shows a completely loaded installation vessel;
Figure 8 shows the installation vessel on a return journey to port;
Figure 9 shows a prior art approach for transporting components of multiple offshore wind-powered electrolysis facilities.

In the diagrams, like numbers refer to like objects throughout. Objects in the diagrams are not necessarily drawn to scale.

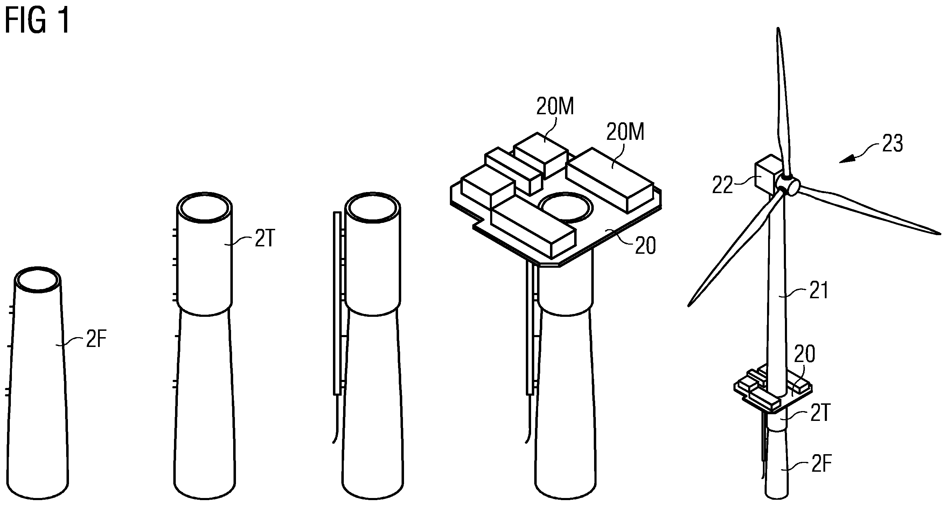

Figure 1 shows stages in the assembly of an exemplary offshore wind-powered electrolysis facility 2. From left to right, a monopile foundation 2F is prepared at an offshore location; a transition piece 2T is mounted atop the monopile 2F; a caisson is attached to the supporting structure 2F, 2T for connection to a subsea pipeline; an electrolyser platform 20 is mounted atop the transition piece 2T; and finally (shown at a smaller scale) a wind turbine - comprising tower 21, nacelle 22 with generator, and aerodynamic rotor with rotor blades 23 attached to a hub - is installed atop the transition piece 2T. The facility 2 can now be commissioned to commence wind-powered electrolysis, for example to produce green hydrogen for export.

As explained above, the components 20, 21, 22, 23 of the offshore facility 2 must be transported to the remote installation site, incurring significant costs.

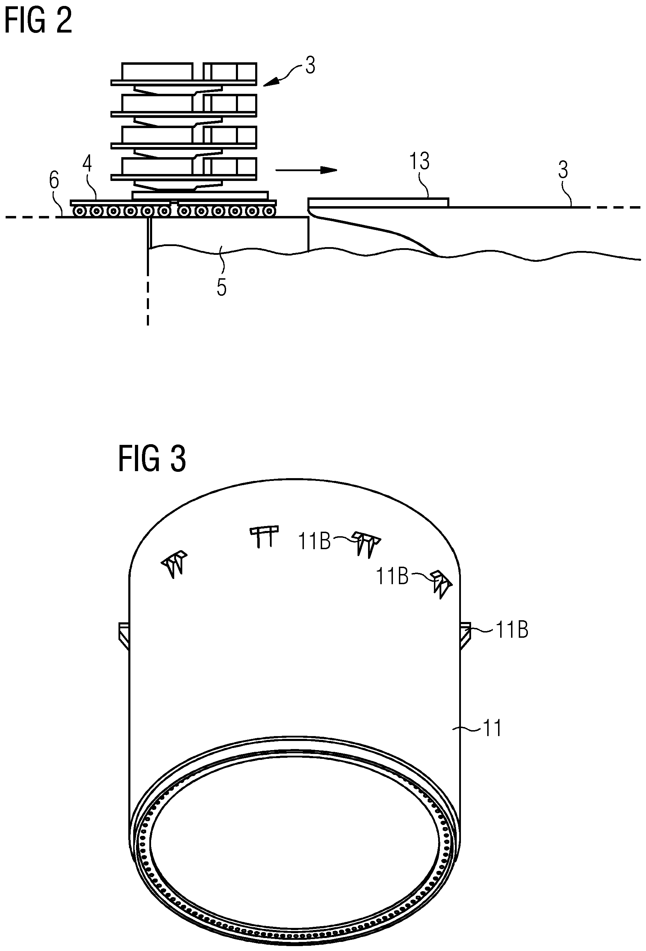

Figures 2 - 8 show stages in loading an installation vessel 3 with components of several offshore wind-powered electrolysis facilities 2 using the inventive method, and illustrate various aspects of the inventive transport arrangement 11, 12, 13.

In a first stage as shown in Figure 2, a stack S of identical components 20 is prepared, for example at a quayside location. The diagram shows the stack S in place on an SPMT 4, and a bridge 5 between the quay and the installation vessel 3 so that the SPMT 4 will be able to deliver the stack S to the deck of the installation vessel 3.

Here, the stack S comprises four electrolyser platforms 20, each electrolyser platform 20 secured to a connector 11. Each electrolyser platform can already be loaded with a number of electrolyser modules 20M. The connectors 11 are stackable and are secured to each other. Each connector 11, as shown in Figure 3, has flanges at its upper and lower ends so that adjacent connectors 11 can be bolted together. Each connector 11 also has an annular arrangement of shelf-like brackets 11B about its circumference, to receive an electrolyser platform 20.

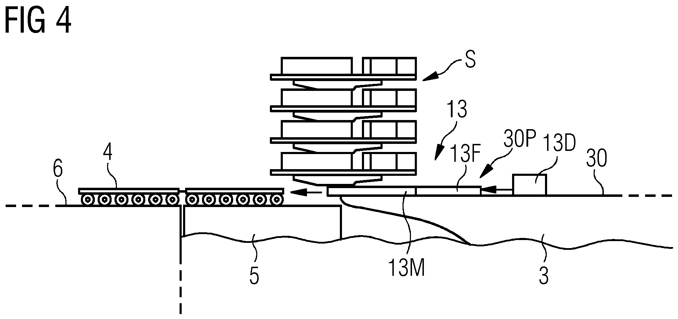

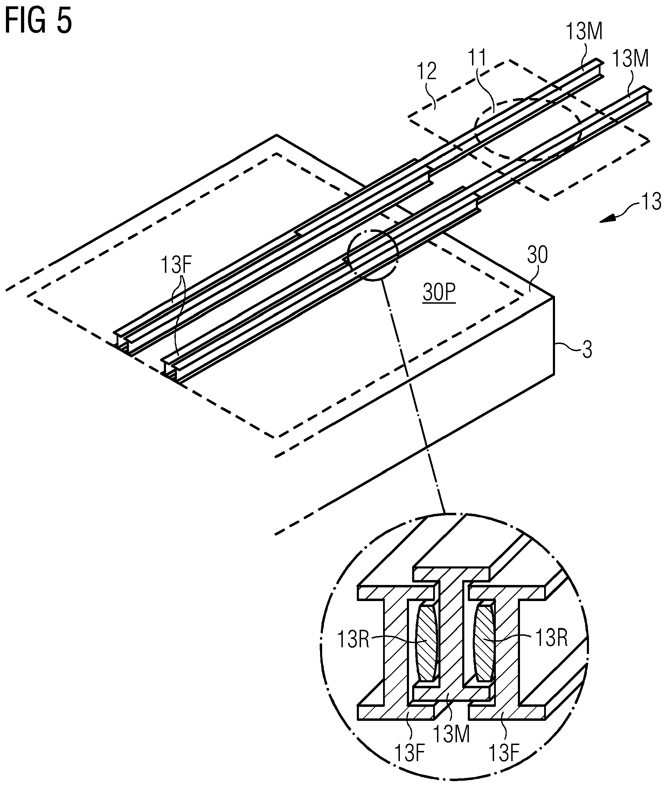

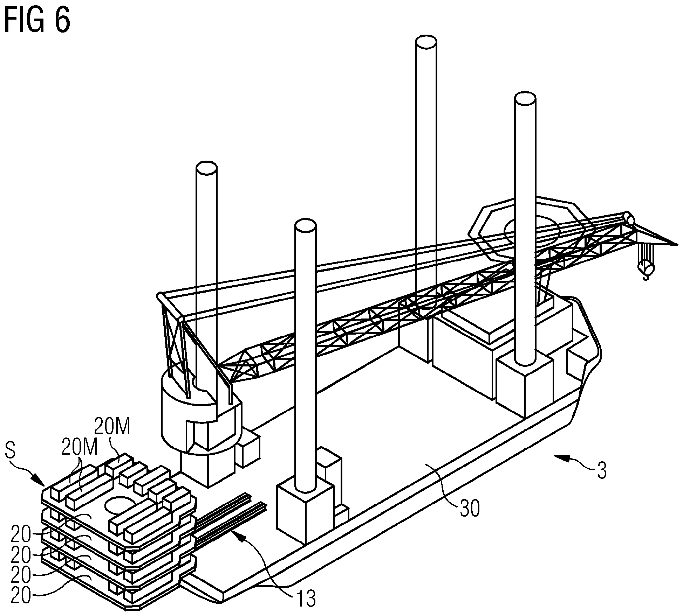

In a next stage as shown in Figure 4, the component stack S is transferred from the SPMT 4 to a stack support means 12 arranged on the moveable beams 13M of the displacement means 13. The lowest connector 11 of the stack S is secured to the stack support means 12. The stack S then occupies a portion 30P of the available deck space. The SPMT 4 is then no longer needed. Once the stack S is in place on the displacement means 13, it is displaced (as indicated by the arrow) to reveal that deck space portion 30P again. To facilitate this step, the stack support means 12 is part of a skidding system, and can be displaced laterally relative to a fixed structure 13F secured to the deck 30 of the installation vessel 3. The skidding system 13F, 13M comprises a set of fixed beams 13F secured to the deck 30, and a further set of beams 13M which can extend relative to the fixed beams 13F as shown in Figure 5. For clarity, this diagram only shows the beams 13F, 13M and indicates the stack support means 12 with the footprint of first (lowest) connector 11 to illustrate the working principle. The enlarged portion of the diagram shows a cross-section through an exemplary embodiment, showing rollers 13R arranged between the vertical faces of the moveable beam 13M and the fixed beams 13F. A suitable displacement means, for example a hydraulic drive, is provided to extend the moveable beams 13M relative to the fixed beams 13F, so that the entire stack S is moved outward, freeing up the previously occupied deck space portion 30P. Figure 6 shows the partially loaded installation vessel 3 after the displacement of the component stack S.

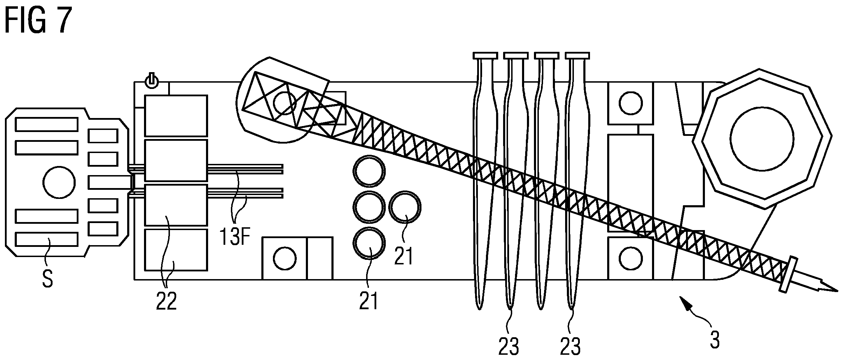

In a subsequent stage, the wind turbine components 21, 22, 23 of the offshore facilities are loaded onto the deck 30. In this exemplary embodiment, four nacelles 22 are loaded into the exposed deck space portion 30P. A suitable support frame 18 can be placed over the fixed beams 13F of the skidding system to receive the nacelles 22. Figure 7 shows, from above, the completely loaded installation vessel 3.

At the offshore installation site, the components are unloaded in the order illustrated in Figure 1 above: an electrolyser platform 20 is lifted off the stack S and installed atop the waiting transition piece 2T; a wind turbine tower 21 is lifted off and mounted on the transition piece 2T; a nacelle 22 is lifted off and mounted to the tower 21; hub and rotor blades 23 are lifted off and attached. One after another, the offshore wind-driven electrolysis facilities are installed.

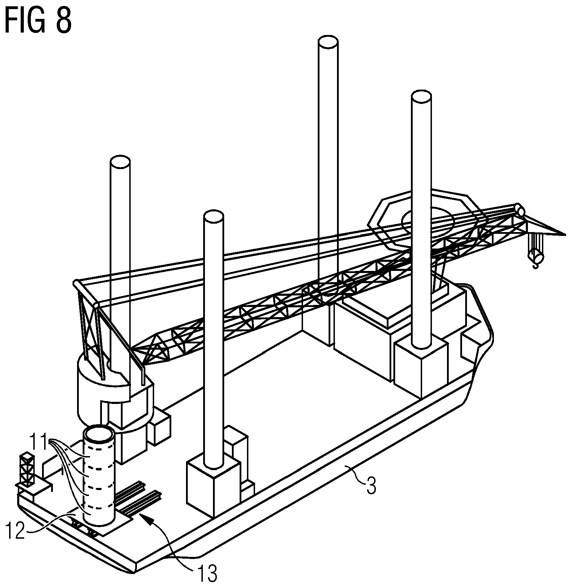

After each electrolyser platform 20 is removed from its supporting connector 11 and lifted off the stack, that connector is removed from the next-lower connector in the stack S, and transferred to the deck 30. One by one, these connectors 11 are lifted to one side and can be arranged in a column (connecting them using an annular arrangement of fasteners as appropriate). After lifting off the fourth electrolyser platform 20 for the final offshore facility, the column of the first three connectors can be lifted back onto the lowest connector 11 and secured to it for safe transfer back to port. Figure 8 shows the installation vessel 3 on its way back to port, with a column of connectors 11 mounted on the skidding system 13.

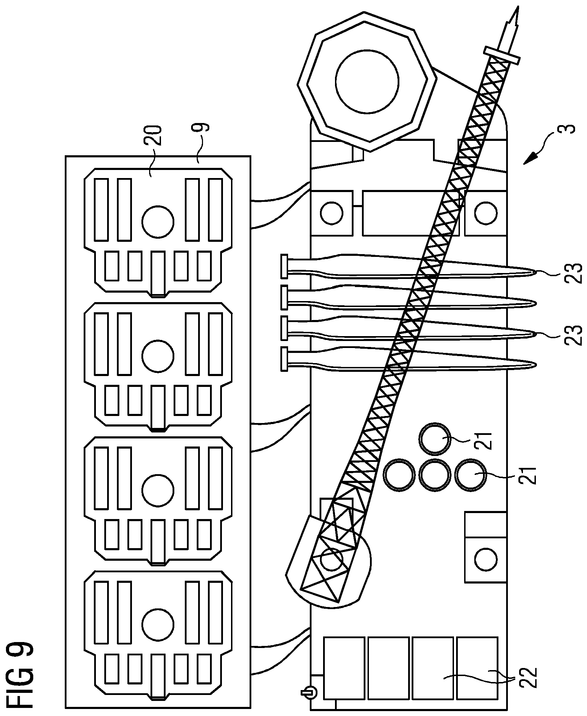

Figure 9 shows a prior art approach. Here, a first installation vessel 3 which will be loaded with the electrolyser platforms for four offshore wind-driven electrolysis facilities 2. The diagram also shows an auxiliary barge 9, loaded will be loaded with the remaining wind turbine components and towed alongside the installation vessel 3 to the offshore site. However, such a joint transport is complicated to arrange and can add significantly to the overall transport costs. Alternatively, a second installation vessel can be loaded with the remaining wind turbine components. In each case, a separate vessel for the electrolyser platforms is necessary because, when loaded with the towers, nacelles and rotor blades for several wind turbines, an installation vessel 3 is already "full". Of course, instead of using two installation vessels to carry the components in a tandem journey to the installation site, the "second installation vessel" can be the same installation vessel used to transport the electrolyser platforms 20 in a first journey, commissioned again to transport the wind turbine components in a second journey. Regardless of the approach used, the costs of vessel hire in the prior art are an unfavourably large factor in the overall cost of energy.

Although the present invention has been disclosed in the form of preferred embodiments and variations thereon, it will be understood that numerous additional modifications and variations could be made thereto without departing from the scope of the invention. For example, each electrolyser platform can be loaded with a number of electrolyser modules prior to assembling a stack of electrolyser platforms for loading onto the installation vessel; alternatively the electrolyser platforms can be loaded with electrolyser modules in a procedure following assembly of the offshore facilities. The electrolyser modules - which can have the dimensions of ISO shipping containers - can be transported economically using a relatively small cargo vessel.

For the sake of clarity, it is to be understood that the use of "a" or "an" throughout this application does not exclude a plurality, and "comprising" does not exclude other steps or elements.

## Claims

1. A transport arrangement (11, 12, 13) for transporting components (20, 21, 22, 23) of a plurality of offshore wind-driven electrolysis facilities (2), comprising
- a set of connectors (11) adapted to facilitate assembly of a stack (S) of components (20);
- a stack support means (12) adapted to support the component stack (S) on the deck (30) of an installation vessel (3); and
- a displacement means (13) adapted to displace the stack support means (12) to expose a portion (30P) of the deck space (30) of the installation vessel (3).

2. A transport arrangement according to the preceding claim, wherein the displacement means (13) comprises a number of extendable beam assemblies (13F, 13M), and wherein an extendable beam assembly (13F) comprises
- a fixed beam (13F) secured to the installation vessel deck (30); and
- a moveable beam (13M) supported by the fixed beam (13F) and adapted to move relative to the fixed beam (13F).

3. A transport arrangement according to the preceding claim, wherein the fixed beams (13F) are secured to the deck (30) at the stern of the installation vessel (3).

4. A transport arrangement according to claim 2 or claim 3, wherein the displacement means (13) comprises a hydraulic drive (13D) adapted to extend and retract the moveable beams (13M) relative to the fixed beams (13F).

5. A transport arrangement according to any of claims 2 to 4, wherein the fixed beams (13F) are secured to the installation vessel deck (30) such that the stack support means (12) is positioned beyond the deck (30) when the moveable beams (13M) are extended.

6. A transport arrangement according to any of the preceding method claims, wherein the component stack (S) comprises a stack of electrolyser platforms (20), and wherein each electrolyser platform (20) is secured to a connector (11).

7. A transport arrangement according to any of the preceding method claims, wherein an offshore facility (2) comprises a transition piece (2T) adapted to receive an electrolyser platform (20), and wherein the form of a connector (11) is based on the transition piece (2T).

8. A transport arrangement according to any of the preceding method claims, wherein the stack support means (12) is adapted to secure a connector (11) to the displacement means (13) .

9. A transport arrangement according to any of the preceding method claims, wherein the stack support means (12) is adapted for use as a skid mount.

10. A transport arrangement according to any of the preceding method claims, comprising a number of electrolyser modules (20M) arranged on each electrolyser platform (20).

11. A method of loading an installation vessel (3) with components (20, 21, 22, 23) of a plurality of offshore wind-driven electrolysis facilities (2) using the transport arrangement (11, 12, 13) according to any of claims 1 to 10, comprising the steps of
- assembling a stack (S) of components (20) of the offshore facilities (2);
- arranging the component stack (S) on the stack support means (12) and transferring the stack support means (12) onto the displacement means (13); and
- displacing the component stack (S) to expose a portion (30P) of the deck space (30) of the installation vessel (3) ;
- arranging further components (22) of the offshore facilities (2) in the exposed deck space portion (30P); and
- arranging the remaining components (21, 23) of the offshore facilities (2) on the deck (30) of the installation vessel (3).

12. A method according to the preceding claim, wherein the component stack (S) is assembled from electrolyser platforms (20) and corresponding connectors (11).

13. A method according to claim 11 or claim 12, wherein the step of displacing the stack support means (12) comprises a step of actuating a hydraulic drive (13D) to extend moveable beams (13M) of the extendable beam assemblies (13) relative to fixed beams (13F) of the extendable beam assemblies (13).

14. A method according to any of claims 11 to 13, comprising a step of arranging nacelles (22) of the offshore facilities (2) within the exposed deck space portion (30P).

15. A method of installing a plurality of offshore wind-driven electrolysis facilities (2), comprising the steps of
- loading an installation vessel (3) with components (20, 21, 22, 23) of a plurality of offshore wind-driven electrolysis facilities (2) using the method according to claims 11 to 14 and transporting the components (20, 21, 22, 23) to an offshore site;
- assembling each offshore facility (2) by
A) transferring an electrolyser platform (20) from the installation vessel (3) onto a waiting transition piece (2T);
B) transferring a tower (21) from the installation vessel (3) onto the transition piece (2T);
C) transferring a nacelle (22) from the installation vessel (3) onto the tower (21); and
D) transferring an aerodynamic rotor (23) from the installation vessel (3) to the nacelle (22).
